**Europäisches Patentamt**

**European Patent Office**

**Office européen des brevets**

(19)

(11) Veröffentlichungsnummer: **0 242 798 B1**

# EUROPÄISCHE PATENTSCHRIFT

(12)

(45) Veröffentlichungstag der Patentschrift:
**26.06.91 Patentblatt 91/26**

(51) Int. Cl.$^5$: **C08J 3/02,** C04B 41/00,
C09D 183/08

(21) Anmeldenummer: **87105629.7**

(22) Anmeldetag: **15.04.87**

(54) **Wässerige Emulsionen von Organopolysiloxan und Verwendung solcher Emulsionen.**

Die Akte enthält technische Angaben, die nach dem Eingang der Anmeldung eingereicht wurden und die nicht in dieser Patentschrift enthalten sind.

(30) Priorität: **21.04.86 DE 3613384**

(43) Veröffentlichungstag der Anmeldung:
**28.10.87 Patentblatt 87/44**

(45) Bekanntmachung des Hinweises auf die Patenterteilung:
**26.06.91 Patentblatt 91/26**

(84) Benannte Vertragsstaaten:
**AT BE CH DE FR GB IT LI NL**

(56) Entgegenhaltungen:
**EP-A- 0 068 671**
**EP-A- 0 130 521**
**EP-A- 0 186 265**
**EP-A- 0 186 847**
**US-A- 3 355 424**

(73) Patentinhaber: **WACKER-CHEMIE GMBH**
**Prinzregentenstrasse 22**
**W-8000 München 22 (DE)**

(72) Erfinder: **Mayer, Hans, Dr.**
**Lindacher Str. 67**
**W-8263 Burghausen (DE)**
Erfinder: **Wilhelm, Hermann**
**Südtiroler Str. 22**
**A-5280 Braunau (DE)**
Erfinder: **Deubzer, Bernward, Dr.**
**Virchowstr. 14**
**W-8263 Burghausen (DE)**

## Beschreibung

Aus EP-A-0068671, veröffentlicht 5. Januar 1983, Dow Corning Limited, sind wäßrige Zusammensetzungen bekannt, die Salz von wasserlöslicher organischer oder anorganischer Säure und Organopolysiloxan, das zusätzlich zu anderen Siloxaneinheiten solche Siloxaneinheiten enthält, die SiC-gebundene Reste mit basischem Stickstoff aufweisen, eine in solchem Salz lösliche Siliciumverbindung, wie Methyltrimethoxysilan oder ein Teilhydrolysat eines derartigen Silans, und wasserlösliches Lösungsmittel enthalten.

Gegenstand der noch nicht veröffentlichen Deutschen Patentanmeldung P 34 47 636.9 (EP-A-186847) sind bei Verdünnen mit Wasser durchsichtige Gemische ergebende Zusammensetzungen, die als wesentliche Bestandteile

(A) Salz von wasserlöslicher organischer oder anorganischer Säure und Polysiloxan das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, und

(B) organische Siliciumverbindung mit basischem Stickstoff in Mengen von 0 bis 0,5 Gewichtsprozent, bezogen auf das Gewicht solcher organischer Siliciumverbindung, sowie zumindest, wenn Bestandteil (B) nicht zu mindestens 0,1 Teilen je Gewichtsteil Bestandteil (A) aus mindestens einer organischen Siliciumverbindung mit einem Molekulargewicht von höchstens 600 g/Mol besteht,

(C) organisches Lösungsmittel, das bei 20°C und 1020 hPa (abs.) höchstens zu einem Gewichtsteil in 100 Gewichtsteilen Wasser löslich und von Halogenatomen frei ist, mit Ausnahme von Oktanolen enthalten und frei sind von wasserlöslichem Lösungsmittel oder Oktanolen oder solches Lösungsmittel oder Oktanole in Mengen von höchstens 5 Gewichtsprozent, bezogen auf das Gewicht von Bestandteile (A) enthalten.

Bei Bestandteil (B) kann es sich um Organopolysiloxan mit über Sauerstoff an Silicium gebundenen aliphatischen Resten mit einem Molekulargewicht von etwa 600 g/Mol handeln.

Es ist Aufgabe der Erfindung, wäßrige Emulsionen von Organopolysiloxan mit über Sauerstoff an Silicium gebundenen aliphatischen Resten mit einem Molekulargewicht von mindestens 620 g/Mol bereitzustellen, die frei sein können von organischem Lösungsmittel, das bei 20°C und 1020 hPa (abs.) höchstens zu einem Gewichtsteil in 100 Gewichtsteilen Wasser löslich und von Halogenatomen frei ist, die sehr lange lagerfähig ohne Entmischungserscheinungen sind, bei ihrer Verwendung als Imprägniermittel beispielsweise von Baustoffen besonders tief in die zu imprägnierenden Stoffe eindringen, mit anderen Harzen besonders gut verträglich sind, zu klaren Filmen auftrocknen und dabei in ausreichendem Ausmaß vernetzen, wobei die so erhaltenen Filme besonders wasserbeständig sind. Diese Aufgabe wird durch die Erfindung gelöst.

Gegenstand der Erfindung sind wäßrige Emulsionen von (A) Organopolysiloxan mit über Sauerstoff an Silicium gebundenen aliphatischen Resten mit einem Molekulargewicht von mindestens 620 g/Mol, die als Emulgiermittel (B) Salz von wasserlöslicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, enthalten, dadurch gekennzeichnet, daß sie frei von wasserlöslichem Lösungsmittel oder Oktanolen sind oder solches Lösungsmittel oder Oktanole in Mengen von höchstens 5 Gewichtsprozent, bezogen auf das Gewicht des vorstehend definierten Emulgiermittels (B), enthalten.

Bei den Organopolysiloxanen (A) mit über Sauerstoff an Silicium gebundenen aliphatischen Resten mit einem Molekulargewicht von mindestens 620 g/Mol kann es sich um beliebige Organopolysiloxane mit über Sauerstoff an Silicium gebundenen aliphatischen Resten mit einem Molekulargewicht von mindestens 620 g/Mol handeln, die auch bisher in Wasser emulgiert werden konnten. Vorzugsweise handelt es sich dabei um solche der Formel

$$R^1{}_x Si(OR^2)_y O_{\frac{4-x-y}{2}} \quad ,$$

wobei $R^1$ gleiche oder verschiedene SiC-gebundene, einwertige organische Reste, $R^2$ gleiche oder verschiedene, einwertige aliphatische Reste bedeutet, x 0, 1, 2 oder 3, durchschnittlich 0,75 bis 1,5, vorzugsweise 0,9 bis 1,1 und y 0, 1, 2 oder 3, durchschnittlich 0,2 bis 2,0, vorzugsweise 0,4 bis 1,2 ist, natürlich mit der Maßgabe, daß diese Organopolysiloxane ein Molekulargewicht von mindestens 620 g/Mol besitzen.

Vorzugsweise enthalten die organischen Reste $R^1$ höchstens 14 Kohlenstoffatome je Rest. Beispiele für organische Reste $R^1$ sind geradkettige oder verzweigte Alkylreste, wie der Methyl-, Ethyl-, n-Propyl-, Isopropyl-, n-Butyl- und sec.-Butylrest sowie Oktyl- und Tetradecylreste ; Cycloalkylreste, wie der Cyclohexylrest und

2

Methylcyclohexylreste ; Kohlenwasserstoffreste mit aliphatischen Kohlenstoff-Kohlenstoff-Doppelbindungen, wie der Vinyl- und Allylrest ; Arylreste, wie der Phenylrest und Xenylreste ; Alkarylreste, wie Tolyl- und Xylylreste ; und Aralkylreste, wie der Benzylrest.

Bei den SiC-gebundenen organischen Resten $R^1$ kann es sich aber auch um substituierte, einwertige Kohlenwasserstoffreste mit vorzugsweise höchstens 14 Kohlenstoffatomen je Rest handeln. Beispiele für solche substituierten Kohlenwasserstoffreste sind insbesondere halogenierte Kohlenwasserstoffreste, wie der 3,3,3-Trifluorpropylrest und o-, m- und p-Chlorphenylreste, und aus Kohlenstoff-, Wasserstoff-, Fluor- und Ethersauerstoffatomen als einzigen Atomen aufgebaute SiC-gebundene Reste, wie der 1,1,2,2-Tetrafluorethoxypropyl- und der 1,1,2,2,3,3-Hexafluorpropyloxypropylrest.

Schon wegen der leichteren Zugänglichkeit sind vorzugsweise mindestens 50% der Anzahl der SiC-gebundenen organischen Reste im Organopolysiloxan (A) und damit der Reste $R^1$ Methylester. Die gegebenenfalls vorliegenden übrigen organischen Reste im Organopolysiloxan (A) sind vorzugsweise Vinyl- oder Phenylreste oder Gemische solcher Reste.

Vorzugsweise enthalten die Reste $R^2$ höchstens 4 Kohlenstoffatome je Rest und sind Alkylreste, wie der Methyl-, Ethyl-, n-Propyl-, Isopropyl-, n-Butyl-, sec.-Butyl- und tert.-Butylrest, wobei der Ethylrest besonders bevorzugt ist.

Vorzugsweise haben die Organopolysiloxane (A) und damit auch die Organonolysiloxane der oben angegebenen Formel eine Viskosität von 15 bis 2000 mPa · s bei 25°C, insbesondere 20 bis 200 mPa · s bei 25°C.

Bei Organopolysiloxan (A) kann es sich um eine einzelne Art von Organopolysiloxan handeln. Es kann sich aber auch um ein Gemisch aus mindestens zwei verschiedenen Arten derartiger Organopolysiloxane handeln.

Die Herstellung von als Organopolysiloxan (A) geeigneten Organopolysiloxanen ist bekannt und z.B. in GB-A-685 173 (veröffentlicht 31. Dezember 1951, Dow Corning Limited), US-A-28 42 521, ausgegeben 8. Juli 1958, S. Nietzsche et al., Wacker-Chemie GmbH, FR-A-14 75 709, ausgegeben 7. April 1967, General Electric Company, US-A-36 68 180, ausgegeben 6. Juni 1972, J.L. Brennan et al., Stauffer-Wacker-Silicone Corporation, US-A-37 92 071, ausgegeben 12. Februar 1974, S. Nietzsche et al., Wacker-Chemie GmbH, US-A-38 46 358, ausgegeben 5. November 1974, G.F. Roedel, General Electric Company, US-A-42 09 454, W.Graf et al., Wacker-Chemie GmbH und US-A 42 98 753, ausgegeben 3. November 1981, A. Schinabeck et al., Wacker-Chemie GmbH, beschrieben.

Besonders bevorzugt als Organopolysiloxane (A) sind solche, die durch Umsetzung von Methyltrichlorsilan mit Ethanol und Wasser erhältlich sind.

Vorzugsweise enthalten die erfindungsgemäßen Emulsionen Organopolysiloxan (A) in Mengen von 1 bis 60 Gewichtsprozent, insbesondere 20 bis 50 Gewichtsprozent, jeweils bezogen auf das Gesamtgewicht der jeweiligen Emulsion.

Die Polysiloxane durch deren Umsetzung mit wasserlöslicher organischer oder anorganischer Säure das Emulgiermittel (B) in den erfindungsgemäßen wäßrigen Emulsionen von Organopolysiloxan erhältlich ist, sind vorzugsweise solche aus Einheiten der Formel

$$R^1_m R^3_n Si(OR^4)_z O_{\frac{4-m-n-z}{2}} \quad ,$$

worin $R^1$ die oben dafür angegebene Bedeutung hat, $R^3$ die einwertigen, SiC-gebundenen Reste mit basischem Stickstoff, die ebenfalls gleich oder verschieden sein können, bedeutet, $R^4$ Wasserstoff ist oder die gleiche Bedeutung wie $R^2$ hat, m 0, 1, 2 oder 3, durchschnittlich 0 bis 2, vorzugsweise 0 bis 1,8, n 0 oder 1, durchschnittlich 0,1 bis 0,6, vorzugsweise 0,15 bis 0,30, z 0, 1, 2 oder 3, durchschnittlich 0,01 bis 0,8, vorzugsweise 0,1 bis 0,6 und die Summe der jeweiligen Durchschnittswerte von m + n + z höchstens 3,4 ist.

Alle Ausführungen über die Reste $R^1$ im Organopolysiloxan (A) und alle einzelnen Beispiele für Reste $R^1$, die im Zusammenhang mit Organopolysiloxan (A) angegeben wurden, gelten auch für die Reste $R^1$ im Emulgiermittel (B) mit der Maßgabe, daß im Emulgiermittel (B) als Rest $R^1$ auch der Phenylrest sehr bevorzugt ist.

Als einwertige SiC-gebundene Reste mit basischem Stickstoff, also als Reste $R^3$ sind solche der Formel

$$R^5_2 NR^6-,$$

worin $R^5$ Wasserstoff oder gleiche oder verschiedene Alkyloder Aminoalkylreste und $R^6$ einen zweiwertigen Kohlenwasserstoffrest bedeutet.

Die Beispiele für Alkylreste $R^1$, die ebenfalls vorzugsweise höchstens 14 Kohlenstoffatome je Rest aufweisen, gelten im vollen Umfang auch für die Alkylreste $R^5$. Vorzugsweise ist jedoch an jedes Stickstoffatom

3

in den Resten der Formel

$$R^5_2NR^6-,$$

mindestens ein Wasserstoffatom gebunden.

Beispiele für zweiwertige Kohlenwasserstoffreste $R^6$ sind der Methylen- und Ethylenrest sowie Propylen-, Butylen-, Cyclohexylen-, Oktadecylen-, Phenylen- und Butenylenreste. Insbesondere wegen der leichteren Zugänglichkeit ist als Rest $R^6$ der n-Propylenrest bevorzugt.

Besonders bevorzugt als einwertiger, SiC-gebundener Rest mit basischem Stickstoff ist der Rest der Formel

$$H_2N(CH_2)_2NH(CH_2)_3-,$$

Weitere Beispiele für SiC-gebundene Reste $R^3$ mit basischem Stickstoff sind solche der Formeln

$$H_2N(CH_2)_3-$$

$$H_2N(CH_2)_2-$$

$$H_3CHN(CH_2)_3-$$

$$H_2N(CH_2)_5-$$

$$H(NHCH_2CH_2)_3- \text{ und}$$

$$n-C_4H_9NH(CH_2)_2NH(CH_2)_3-.$$

Alle Ausführungen über die Reste $R^2$ im Organopolysiloxan (A) und alle einzelnen Beispiele für Kohlenwasserstoffreste $R^2$, die im Zusammenhang mit Organopolysiloxan (A) angegeben wurden, gelten im vollen Umfang auch für aliphatische Reste $R^2$ im Emulgiermittel (B).

Die Polysiloxane, die zusätzlich zu anderen Siloxaneinheiten solche Siloxaneinheiten enthalten, die einwertige, SiC-gebundene Reste mit basiscbem Stickstoff aufweisen, können in bekannter Weise beispielsweise durch Äquilibrieren bzw. Kondensieren von z.B. gamma-Aminoethylaminopropyltrimethoxysilan oder gamma-Aminoethylaminopropylmethyldimethoxysilan oder einem Gemisch aus derartigen Silanen mit organischen Polysiloxanen, die frei von basischem Stickstoff sind, hergestellt werden. Vorzugsweise haben die dabei verwendeten Polysiloxane ein Molekulargewicht von mindestens 350 g/Mol. Diese Polysiloxane können beispielsweise sein :

Monoorganopolysiloxane, wie Monoalkyl- oder Monoarylpolysiloxane, z.B. solche der Summenformel

$$CH_3Si(OC_2H_5)_{0,8}O_{1,1}$$

oder

$$C_6H_5Si(OC_2H_5)_{0,72}O_{1,14},$$

Hydrolysate von Isooktyltricblorsilan, Mischbydrolysate von Phenyltrichlorsilan und n-Propyltrichlorsilan, Methoxygruppen aufweisende Mischpolymere aus Monomethylsiloxan- und Monoisooktylsiloxaneinheiten, durch Trimethylsiloxygruppen endblockierte Dimethylpolysiloxane, in den endständigen Einheiten je eine Si-gebundene Hydroxylgruppe aufweisende Dimethylpolysiloxane, als endständige Einheiten solche der Formel

$$-Si(CH_3)_2OR^2$$

aufweisende Dimethylpolysiloxane, wobei $R^2$ die oben dafür angegebene Bedeutung hat, Polyethylsilikate und Mischpolymere aus Dimethylsiloxan- und Monomethylsiloxaneinheiten.

Die wasserlöslichen organischen oder anorganischen Säuren, die zur Herstellung der das Emulgiermittel (B) in den erfindungsgemäßen wäßrigen Emulsionen von Organopolysiloxan verwendet werden, können die gleichen sein, die auch bisher zur Herstellung von Salzen von wasserlöslicher organischer oder anorganischer Säure und Polysiloxan mit basischem Stickstoff aufweisenden SiC-gebundenen Resten eingesetzt werden konnten. Beispiele für derartige Säuren sind Salzsäure, Schwefelsäure, Essigsäure, Propionsäure und Diethylhydrogenphosphat. Essigsäure und Propionsäure sind bevorzugt.

Verbindungen, die als Emulgiermittel (B) in den erfindungsgemäßen Emulsionen vorliegen können, sind bereits bekannt. Hierzu wird außer auf die bereits eingangs genannte EP-A-0068671 z.B. auf US-A-3 890 269, ausgegeben 17. Juni 1975, E.R. Martin, Stauffer Chemical Company, US-A-3 355 424, L. Brown, Dow Corning Corporation und US-A-4 247 330, ausgegeben 27. Januar 1981, A.J. Sanders, Jr., SWS Silicones Corporation, verwiesen.

Der Begriff "basischer Stickstoff", wie er hier in der Beschreibung und mindestens einem der Patentansprüche in Verbindung mit Mengenangaben gebraucht wird, bezieht sich auf Stickstoff, berechnet als Element.

Vorzugsweise enthalten die erfindungsgemäßen Emulsionen Salz (B) von wasserlöslicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, in Mengen von 1 bis 30 Gewichtsprozent, insbesondere 5 bis 20 Gewichtsprozent, jeweils bezogen auf das Gesamtgewicht der jeweiligen Emulsion, und von 18 bis 50 Gewichtsprozent, insbesondere von 30 bis 50 Gewichtsprozent, bezogen auf das Gewicht von Organopolysiloxan (A).

Die erfindungsgemäßen wäßrigen Emulsionen werden vorzugsweise dadurch hergestellt, daß zunächst Organopolysiloxan (A) mit Emulgiermittel (B) vermischt und dann die so erhaltene Mischung in Wasser emulgiert wird. Sowohl das zunächst erwähnte Vermischen als auch das Emulgieren kann in üblichen, zur Herstellung von Emulsionen geeigneten Mischgeräten, wie schnellaufenden Stator-Rotor-Rührgeräten nach Prof. P. Willems, wie sie unter dem Registrierten Warenzeichen "Ultra-Turrax" bekannt sind, Druckemulgiermaschinen oder Kolloidmühlen, erfolgen.

Vorzugsweise sind die erfindungsgemäßen Emulsionen auch frei von anderem organischem Lösungsmittel als wasserlöslichem Lösungsmittel oder Oktanolen oder enthalten sie solches Lösungsmittel in Mengen von höchstens 5 Gewichtsprozent, bezogen auf das Gewicht von Emulgiermittel (B).

Die erfindungsgemäßen wäßrigen Emulsionen von Organopolysiloxan eignen sich z.B. zur Hydrophobierung von mineralischen Stoffen, wie Baustoffen, z.B. Dachziegel Ziegelsteinen, bewehrtem oder unbewehrtem Beton, Natursteinen, einschließlich Kalksteinen, Gips, Schlackensteinen, Kalksandsteinen und Asbest durch Auftragen der Emulsionen auf diese Baustoffe nach deren Formgebung und gegebenenfalls weiterer Behandlung, wie nach dem Brennen der Ziegelsteine, wobei dieses Auftragen vor oder nach Verbringen der Baustoffe an ihren endgültigen Bestimmungsort, wie einer Fassade oder einer Straße, erfolgen kann.

Die erfindungsgmäßen wäßrigen Emulsionen von Organopolysiloxan eignen sich auch als hydrophobierende Zusätze für anorganische Bindemittel, z.B. Gips, Mörtel oder Verputz, Beton, einschließlich Gasbeton, oder Kalksandstein vor deren Formgebung, insbesondere im Gemisch mit dem Anmachwasser.

Die erfindungsgemäßen wäßrigen Emulsionen von Organopolysiloxan eignen sich weiterhin als Bindemittel für anorganische faserige Stoffe, wie Glasfasern, Asbest, Stein- und Schlackenwolle.

Die erfindungsgemäßen wäßrigen Emulsionen von Organopolysiloxan eignen sich weiterhin als Zusätze zu Dispersionen von rein-organischen Harzen, wie Polyvinylacetat- oder Polyacrylsäureester – Dispersionen, und als Hydrophobiermittel in phenolharzgebundenen mineralischen Wärmedämmstoffen.

Die erfindungsgemäßen wäßrigen Emulsionen von Organopolysiloxan eignen sich auch als Zusätze zu anorganischen Anstrichmitteln, wie Wasserglas- und Kalkfarben.

Die erfindungsgemäßen wäßrigen Emulsionen von Organopolysiloxan eignen sich auch als Bindemittel in wäßrigen Anstrichen auf z.B. Holz, Mauerwerk, Metallen, Kunststoffen oder Glas, wobei diese wäßrigen Anstrichmittel beliebige Pigmente, einschließlich Aluminiumpulver, enthalten können.

Die erfindungsgemäßen wäßrigen Emulsionen eignen sich schließlich auch z.B. als Grundiermittel für Organopolysiloxanelastomere.

Spätestens bei der endgültigen Verwendung können den erfindungsgemäßen Emulsionen Kondensationskatalysatoren oder Mittel zur Verbesserung der Haftung der aus diesen Emulsionen erzeugten Beschichtungen auf den Unterlagen, auf denen sie erzeugt wurden, zugesetzt werden.

In den folgenden Beispielen beziehen sich alle Angaben von Teilen und Prozentsätzen auf das Gewicht, soweit nichts anderes angegeben ist.

a) Das in den folgenden Beispielen als Organopolysiloxan (A) verwendete Monomethylsiloxan mit über Sauerstoff an Silicium gebundenen Ethylgruppen wurde hergestellt wie folgt :

Ein Gemisch aus 10 Mol Ethanol und 5,5 Mol Wasser wurde aus einem Tropftrichter zu einem Gemisch aus 6 Mol Methyltrichlorsilan und 400 g Toluol unter Rühren tropfenweise gegeben, wobei gasförmiger Chlorwasserstoff entwich und sich der zunächst bei 30°C befindliche Inhalt des Reaktionsgefäßes stark abkühlte. Nach Beendigung der Zugabe des Ethanol-Wassergemisches wurde das Reaktionsgemisch auf 40°C erwärmt und bei 20 hPa (abs.) ein Gemisch aus Ethanol, Wasser und Chlorwasserstoff abdestilliert. Restlicher Chlorwasserstoff wurde mit wasserfreiem Natriumcarbonat neutralisiert und anschließend restliches Ethanol und Wasser bei 30 hPa (abs.) bis 120°C als Temperatur des flüssigen Kolbeninhalts abdestilliert. Nach Abkühlung und Filtrieren des bei der Destillation erhaltenen Rückstandes wurde eine klare, farblose Flüssigkeit mit einer Viskosität von 20 mPa · s bei 23°C erhalten. Sie hat die Bruttoformel

$$CH_3Si(OC_2H_5)_{0,8}O_{1,1}.$$

Dieses Organopolysiloxan hat ein Molekulargewicht von 650 g/Mol.

b) Das in den folgenden Beispielen als Emulgator (B) verwendete Salz von wasserlöslicher organischer Säure und Organopolysiloxan mit SiC-gebundenen Resten mit basischem Stickstoff wurde hergestellt wie folgt:

In einem mit Rührer, Tropftrichter und Rückflußkühler ausgestatteten 1 l-Dreihalskolben wurden unter Rühren zu einem Gemisch aus 0,2 g KOH in 4 g Methanol und 500 g des Organopolysiloxans, dessen Herstellung vorstehend unter a) beschrieben wurde, 150 g N-(2-Aminoethyl-3-aminopropyltrimethoxysilan, das auch als gamma-Aminoethylaminopropyltrimethoxysilan bezeichnet wird, gegeben. Das so erhaltene Gemisch wurde 6 Stunden zum Sieden unter Rückfluß erwärmt, dann auf 30°C gekühlt, mit 2,5 ml 10%-iger wäßriger Salzsäure vermischt, durch Erwärmen bis auf 140°C von flüchtigen Bestandteilen befreit und filtriert. Das so erhaltene Organopolysiloxan enthält 2,9% basischen Stickstoff, bezogen auf sein Gewicht. Zur Herstellung des Salzes wurden 8 Teile dieses Organopolysiloxans mit 1 Teil Eisessig vermischt.

## Beispiel 1

Bei Raumtemperatur werden 7 Teile des Organopolysiloxans, dessen Herstellung oben unter a) beschrieben wurde, mit 3 Teilen des Organopolysiloxansalzes, dessen Herstellung oben unter b) beschrieben wurde, in einem schnellaufenden Stator-Rotor-Rührgerät nach Prof. P. Willems vermischt. Das so erhaltene Gemisch wird in dem gleichen Rührgerät langsam mit Wasser bis zur Bildung einer cremigen Masse und dann mit weiterem Wasser unter Ausbildung einer O/W-Emulsion vermischt, wobei insgesamt 10 Teile Wasser eingesetzt werden. Ihre Eigenschaften sind :

| | | |
|---|---|---|
| Zentrifugentest:<br>(1 Stunde bei 4000 Umdrehungen je Minute) | | keinerlei Abscheidung |
| Viskosität: | nach Herstellung | 50 mPa.s bei 23°C |
| | nach 7 Tagen | 50 mPa.s bei 23°C |
| | nach 1 Jahr | 75 mPa.s bei 23°C |
| Teilchengröße | nach Herstellung | 175 nm |
| | nach 7 Tagen | 175 nm |
| | nach 1 Jahr | 210 nm |

Nach Herstellung, nach 7 Tagen und nach 1 Jahr trocknet sie auf Glas bei Raumtemperatur zu einem klaren, harten Film.

## Beispiel 2

1 Teil der Emulsion, deren Herstellung in Beispiel 1 beschrieben wurde, wird mit 15 Teilen Wasser verdünnt. Die so erhaltene Mischung wurde als Anmachwasser für einen handelsüblichen Verputz verwendet. Nach 2-stündiger Lagerung eines aus diesem Verputz oder Putz hergestellten Probekörpers bei Raumtemperatur unter Wasser hat dieser Körper nur 2% Wasser, bezogen auf sein Gewicht, aufgenommen, während bei gleicher Wasserlagerung ein Probekörper aus Putz, bei dem als Anmachwasser Wasser ohne Zusatz verwendet wurde, 14% Wasser, bezogen auf sein Gewicht, aufnimmt.

## Beispiel 3

7 Teile der Emulsion, deren Herstellung in Beispiel 1 beschrieben wurde, werden mit 50 Teilen einer handelsüblichen wäßrigen Kalkfarbe vermischt. Nach dem Trocknen eines Anstrichs aus dieser Kalkfarbe verdunstet ein Wassertropfen auf diesem Anstrich, bevor er in den Anstrich eingedrungen ist.

Beispiel 4

1 Teil der Emulsion, deren Herstellung in Beispiel 1 beschrieben wurde, wird mit 5 Teilen Wasser verdünnt. In einem für die Elektrotauchlackierung herkömmlichem Elektrophoresetrog wird an der Kathode ein Eisenblech bei einer Spannung von 60 V innerhalb 2 Minuten mit einem Film von etwa 100 Mikrometer aus dieser verdünnten Emulsion beschichtet. Dieser Film weist nach einer Stunde Erwärmen auf 150°C ausgezeichnete Wasserabweisung auf.

Beispiel 5

1 Teil der Emulsion, deren Herstellung in Beispiel 1 beschrieben wurde, wird mit 5 Teilen Wasser verdünnt und mit einer Geschwindigkeit von 1500 l je Stunde auf 5 Teile Steinwolle gesprüht. Die so behandelte Steinwolle wird nach dem Trocken 10 Minuten bei 200°C verpresst. Diese Presslinge weisen keine merklichen Verfärbungen gegenüber unbehandelter Steinwolle auf. Probekörper aus solchen Presslingen mit den Abmessungen 10 cm × 10 cm × 4 cm werden 30 Minuten in Wasser 2 cm unter der Wasseroberfläche gehalten, dann auf einen Gitterrost mit der schmalen Kante gestellt und 5 Minuten abtropfen gelassen. Danach werden folgende Wasseraufnahmewerte festgestellt :

|  | Wasseraufnahme % |
| --- | --- |
| nach Herstellung der Probekörper | 0,1 |
| nach 24 Stunden Aufbewahren der Probekörper bei 200°C | 0,1 |
| nach 24 Stunden Aufbewahren der Probekörper bei 260°C | 0,4 |

## Ansprüche

1. Wäßrige Emulsionen von (A) Organopolysiloxan mit über Sauerstoff an Silicium gebundenen aliphatischen Resten mit einem Molekulargewicht von mindestens 620 g/Mol, die als Emulgiermittel (B) Salz von wasserlöslicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, enthalten, **dadurch gekennzeichnet,** daß sie frei von wasserlöslichem Lösungsmittel oder Oktanolen sind oder solches Lösungsmittel oder Oktanole in Mengen von höchstens 5 Gewichtsprozent, bezogen auf das Gewicht des vorstehend definierten Emulgiermittels (B), enthalten.

2. Wäßrige Emulsionen nach Anspruch 1, **dadurch gekennzeichnet,** sie Salz (B) von wasserlölicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Organopolysiloxans, aufweisen, in Mengen von 18 bis 50 Gewichtsprozent, bezogen auf das Gewicht von Organopolysiloxan (A) enthalten.

3. Wäßrige Emulsionen nach Anspruch 1 oder 2, **dadurch gekennzeichnet,** daß sie auch frei von anderem organischem Lösungsmittel als dem in Anspruch 1 definierten Lösungsmittel sind oder solches Lösungsmittel in Mengen von höchstens 5 Gewichtsprozent, bezogen auf das Gewicht des in Anspruch 1 definierten Emulgiermittels, enthalten.

4. Verwendung der Emulsionen nach mindestens einem der Ansprüche 1 bis 3 zur Hydrophobierung von mineralischen Stoffen durch Auftragen auf diese Stoffe nach deren Formgebung und gegebenenfalls weiterer Behandlung.

5. Verwendung der Emulsionen nach mindestens einem der Ansprüche 1 bis 3 als hydrophobierende

EP 0 242 798 B1

Zusätze für anorganische Bindemittel.

6. Verwendung der Emulsionen nach mindestens einem der Ansprüche 1 bis 3 als Bindemittel für anorganische faserige Stoffe.

7. Verwendung der Emulsionen nach mindestens einem der Ansprüche 1 bis 3 als Bindemittel in wäßrigen Anstrichen.

## Claims

1. Aqueous emulsions of (A) an organopolysiloxane containing aliphatic radicals bonded to silicon via oxygen and having a molecular weight of at least 620 g/mol, which contain, as the emulsifying agent (B), a salt of a water-soluble organic or inorganic acid and a polysiloxane which, in addition to other siloxane units, contains those siloxane units containing monovalent SiC-bonded radicals which contain basic nitrogen in amounts of at least 0.5 per cent by weight of basic nitrogen, based on the weight of this polysiloxane, characterized in that they are free from a water-soluble solvent or octanols or contain such a solvent or octanols in amounts of not more than 5 per cent by weight, based on the weight of the emulsifying agent (B) defined above.

2. Aqueous emulsions according to Claim 1, characterized in that they contain a salt (B) of a watersoluble organic or inorganic acid and a polysiloxane which, in addition to other siloxane units, contains those siloxane units containing monovalent SiC-bonded radicals which contain basic nitrogen in amounts of at least 0.5 per cent by weight of basic nitrogen, based on the weight of this organopolysiloxane, in amounts of 18 to 50 per cent by weight, based on the weight of the organopolysiloxane (A).

3. Aqueous emulsions according to Claim 1 or 2, characterized in that they are also free from an organic solvent other than the solvent defined in Claim 1 or contain such a solvent in amounts of not more than 5 per cent by weight, based on the weight of the emulsifying agent defined in Claim 1.

4. Use of the emulsions according to at least one of Claims 1 to 3 for hydrophobising mineral substances by application to these substances after shaping and if appropriate further treatment thereof.

5. Use of the emulsions according to at least one of Claims 1 to 3 as hydrophobising additives for inorganic binders.

6. Use of the emulsions according to at least one of Claims 1 to 3 as binders for inorganic fibrous substances.

7. Use of the emulsions according to at least one of Claims 1 to 3 as binders in aqueous paint films.

## Revendications

1. Emulsions aqueuses (A) d'un polyorganosiloxane comportant des restes aliphatiques, líés par l'intermédiaire de l'oxygène à du silicium et présentant un poids moléculaire d'au moins 620 g/mole, qui contiennent comme émulsifiant (B) un sel d'un acide hydrosoluble organique ou minéral et de polysiloxanne (contenant, en plus d'autres motifs siloxanes, des motifs siloxanes présentant des restes monovalents, liés par du carbone à du silicium et contenant de l'azote basique présent en des quantités d'au moins 0,5% en poids d'azote basique, sur la base du poids de ce polysiloxane), émulsions caractérisées en ce qu'elles sont dépourvues d'un solvant hydrosoluble ou d'octanols ou en ce qu'elles contiennent un tel solvant ou des octanols en des proportions d'au maximum 5% en poids, sur la base du poids de l'émulsifiant (B) défini ci-dessus.

2. Emulsions aqueuses selon la revendication 1, caractérisées en ce qu'elles contiennent du sel (B) d'un acide hydrosoluble organique ou minéral et de polysiloxane (qui, en plus d'autres motifs siloxanes, contient des motifs siloxanes présentant des restes monovalents, reliés par du carbone à du silicium et comportant de l'azote basique présent en des quantités d'au moins 0,5% en poids d'azote basique, sur la base du poids de ce polyorganosiloxane), en des quantités de 18 à 50% en poids, sur la base du polyorganosiloxane (A).

3. Emulsions aqueuses selon la revendication 1 ou 2, caractérisée en ce qu'elles sont également dépourvues d'un solvant organique, autre que celui défini à la revendication 1 ou qu'elles ne contiennent un tel solvant qu'en des quantités d'au maximum 5% en poids, sur la base du poids de l'émulsifiant défini à la revendication 1.

4. Utilisation des émulsions selon l'une au moins des revendications 1 à 3 pour rendre hydrophobes des matières minérales, par application sur cette matière, après son façonnage et éventuellement un autre traitement.

5. Utilisation des émulsions selon l'une au moins des revendications 1 à 3, comme additifs pour rendre hydrophobes des liants inorganiques.

6. Utilisation des émulsions selon l'une au moins des revendications 1 à 3, comme liants pour des matières à fibres inorganiques.

7. Utilisation des émulsions selon l'une au moins des revendications 1 à 3 comme liants dans des peintures aqueuses.